**Europäisches Patentamt**

**European Patent Office**

**Office européen des brevets**

(19)

(11) Veröffentlichungsnummer: **0 251 157 B1**

# EUROPÄISCHE PATENTSCHRIFT

(12)

(45) Veröffentlichungstag der Patentschrift: **18.09.91**

(51) Int. Cl.5: **G01C 19/02**

(21) Anmeldenummer: **87109021.3**

(22) Anmeldetag: **23.06.87**

(54) Trägheitssensoranordnung.

(30) Priorität: **30.06.86 DE 3621953**

(43) Veröffentlichungstag der Anmeldung:
**07.01.88 Patentblatt 88/01**

(45) Bekanntmachung des Hinweises auf die
Patenterteilung:
**18.09.91 Patentblatt 91/38**

(84) Benannte Vertragsstaaten:
**DE FR GB IT SE**

(56) Entgegenhaltungen:
**GB-A- 2 025 091
GB-A- 2 118 302
US-A- 4 282 470
US-A- 4 303 978**

(73) Patentinhaber: **Bodenseewerk Gerätetechnik
GmbH
Alte Nussdorfer Strasse 15 Postfach 1120
W-7770 Überlingen/Bodensee(DE)**

(72) Erfinder: **Hartmann, Ulrich, Dr.
Mainauer Strasse 8
Uhldingen(DE)**
Erfinder: **Fessel, Reinhard
Torkelgasse 4
Gaienhofen 3(DE)**
Erfinder: **Jansen, Dirk, Dr.
Im Hubfeld 29
Ohlsbach(DE)**

(74) Vertreter: **Wolgast, Rudolf, Dipl.-Chem. Dr. et
al
Dipl.-Phys. Jürgen Weisse Dipl.Chem. Dr. Rudolf Wolgast Bökenbusch 41 Postfach 11 03
86
W-5620 Velbert 11 Langenberg(DE)**

## Beschreibung

Die Erfindung betrifft eine Trägheitssensoranordnung, enthaltend

(a) einen Kreisel mit einer Drallachse und zwei zueinander und zu der Drallachse senkrechten Eingangsachsen,

(b) einen ersten Abgriff, der auf eine Drehung um eine erste dieser Eingangsachsen anspricht, und einen zweiten Abgriff, der auf eine Drehung um die zweite dieser Eingangsachsen anspricht,

(c) einen ersten Drehmomenterzeuger, durch welchen ein Drehmoment um die erste Eingangsachse auf den Kreisel ausübbar ist, und einen zweiten Drehmomenterzeuger, durch welchen ein Drehmoment um die zweite Eingangsachse auf den Kreisel ausübbar ist,

(d) Fesselreglermittel, welche von den Ausgangssignalen der Abgriffe beaufschlagt sind und durch welche auf die Drehmomenterzeuger aufgeschaltete Fesselsignale erzeugbar sind, durch welche der Kreisel elektrisch an eine Mittelstellung gefesselt ist, mit

- Analog-Digital-Wandlern, auf welche die Signale der Abgriffe zur Erzeugung von digitalisierten Abgriffsignalen aufgeschaltet sind,
- einem Digitalrechner, der von den digitalisierten Abgriffsignalen beaufschlagt ist und als Ausgangssignale digitale Fesselsignale liefert, und
- einem Digital-Analog-Wandler, der von dem digitalen Fesselsignal beaufschlagt ist und analoge Fesselsignale liefert, die auf je einen der Drehmomenterzeuger aufgeschaltet sind.

Zur Bestimmung der Drehgeschwindigkeit von Flugzeugen oder Flugkörpern benutzt man elektrisch gefesselte Kreisel. Die Bewegung des Kreisels um eine zur Drallachse des Keisels senkrechte Eingangsachse relativ zu einem Gehäuse wird durch einen Abgriff abgegriffen, der ein Abgriffsignal liefert. Dieses Abgriffsignal wird auf eine Fesselelektronik gegeben, die ein Fesselsignal liefert. Das Fesselsignal ist auf einen Drehmomenterzeuger geschaltet. Der Drehmomenterzeuger übt auf den Kreisel ein Drehmoment um eine zu der Eingangsachse und der Drallachse senkrechte Achse aus, derart, dass der Kreisel elektrisch an eine Ruhelage relativ zu dem Gehäuse gefesselt ist. Das dabei aufgebrachte Drehmoment, das wiederum durch den dem Drehmomenterzeuger zugeführten Strom repräsentiert ist, ist im Idealfall proportional der Drehgeschwindigkeit des Kreisels und des Gehäuses um die Eingangsachse. Bei bekannten elektrisch gefesselten Kreiseln ist die Fesselelektronik ein analoges Verstärkernetzwerk, welches mit dem gewünschten Zeitverhalten unmittelbar einem dem Drehmomenterzeuger zugeführten Strom liefert. Wenn die Signalverarbeitung digital erfolgt, wird dieser Strom mittels eines Analog-Digital-Wandlers in ein digitales Ausgangssignal umgesetzt.

Es sind Trägheitssensoranordnungen bekannt, bei denen die Winkelgeschwindigkeiten um drei zueinander senkrechte Achsen gemessen werden. Das kann durch drei elektrisch gefesselte Kreisel der vorstehend beschriebenen Art geschehen. Es kann aber auch ein Kreisel verwendet werden, der zwei zueinander und zur Drallachse senkrechte Eingangsachsen besitzt. Auf jeder der Eingangsachsen sitzt ein Abgriff und ein Drehmomenterzeuger. Das Abgriffsignal des Abgriffs auf der einen Eingangsachse ist über die Fesselelektronik auf den Drehmomenterzeuger geschaltet, der um die andere Eingangsachse wirkt und umgekehrt. (DE-A-27 41 274; DE-C-28 18 202). Auf diese Weise werden mit einem Kreisel die Drehgeschwindigkeiten um zwei Koordinatenachsen erfasst, so dass die Trägheitssensoranordnung insgesamt nur zwei Kreisel zu enthalten braucht.

Die US-A-4 303 978 zeigt beispielsweise eine Trägheitssensoranordnung mit Kreiseln und Beschleunigungsmessern, bei welcher rohe Kreisel- und Beschleunigungsmesserdaten einem Rechner zugeführt werden. Der Rechner eliminiert aus den Kreiseldaten und den Beschleunigungsmesserdaten die Kreiselfehler. Es werden auch Fehlausrichtungen der Kreisel und Beschleunigungsmesser berücksichtigt.

Die bekannten Trägheitssensoranordnungen bringen einige Probleme mit sich:

Bei Kreiseln der vorliegenden Art tritt ein extrem grosser Dynamikbereich auf. Dieser Dynamikbereich kann über 1:50 000 liegen. Es werden daher entsprechend extrem hohe Anforderungen an die Genauigkeit, Linearität und Temperaturkonstanz gestellt. Das gilt auch für die Temperatur und Langzeitstabilität der Fesselelektronik.

Eine Kompensation von Kreiselfehlern kann - mit Ausnahme der Temperaturkompensation - praktisch nicht in der Fesselelektronik durchgeführt werden. Eine solche Fehlerkorrektur muss in einem nachgeschalteten Digitalrechner erfolgen (DE-C-30 28 649). Dies gilt insbesondere für Kreiselfehler, die von anderen Einflussgrössen abhängen. Solche Einflussgrössen sind z.B. Linearbeschleunigungen. Es gibt weiterhin bei Kreiseln das sog. "Kreuzkopplungsverhalten". Im Falle von dynamisch abgestimmten Kreiseln bewirkt eine Drehbewegung um die erste Eingangsachse ein Drehmoment um die zweite Eingangsachse. Hierdurch ergibt sich aufgrund der Kreiselmechanik (Nutation) und der Fesselkreisstruktur eine Rückwirkung, die zu einem Drehmoment um die erste Eingangsachse führt und somit fälschlicherweise als Drehbewegung um die zweite Eingangsachse interpretiert wird.

Weitere Probleme ergeben sich mit der Digitalisierung des analogen Ausgangssignals. Wenn die Digitalisierung mit einem üblichen vergleichenden Analog-Digital-Wandler erfolgt, so ergibt sich ein Quantisierungsfehler, welcher dem Wert der niedrigsten Stelle des digitalisierten Signals entspricht. Das vom Kreisel gelieferte Drehgeschwindigkeitssignal wird bei den meisten Anwendungen zu einem Winkellagesignal aufintegriert. Ein Quantisierungsfehler des Winkelgeschwindigkeitssignals bedeutet, dass Winkelgeschwindigkeiten bis zum Wert der niedrigsten Stelle des digitalisierten Signals überhaupt nicht erfasst werden. Bei der Integration der Winkelgeschwindigkeitssignale über die Zeit ergibt dies einen systematischen Fehler, welcher einer Kreiseldrift entspricht. Diese systematischen Fehler betragen im allgemeinen ein Mehrfaches dessen, was zulässig ist.

Es ist daher bekannt, zur Analog-Digital-Wandlung einen integrierenden Spannungs-Frequenz-Wandler zu verwenden. Der auf den Drehmomenterzeuger gegebene Strom wird in eine dazu proportionale Frequenz umgesetzt. Jeder Ausgangsimpuls des Spannungs-Frequenz-Wandlers entspricht dann einem Winkelinkrement. Dieses Verfahren stellt wegen des grossen Dynamikbereiches hohe Anforderungen an den Spannungs-Frequenz-Wandler. Da eine Frequenz kein Vorzeichen beinhaltet, muss das Vorzeichen des Ausgangssignals getrennt erzeugt werden. Das ergibt Abgleichprobleme im Bereich kleiner Winkelgeschwindigkeiten. Da niedrige Winkelgeschwindigkeiten mit entsprechend niedriger Frequenz ausgegeben werden, ergibt sich bei Abtastung der Inertialinformation mit einer hohen Taktrate von z.B. mehreren 100 Hz nur eine grobe Quantisierung.

Das Frequenzübertragungsverhalten der Fesselelektronik wird dadurch ungünstig beeinflusst, dass die vom Spannungs-Frequenz-Wandler gelieferten Impulse zur Erzeugung der Ausgangsinformation erst aufsummiert werden müssen. Das bedingt eine zusätzliche Verzögerung zwischen dem Auftreten einer Drehgeschwindigkeit und der Ausgabe der digitalen Ausgangsinformation. Eine solche Verzögerung bedeutet eine Totzeit, welche sich nachteilig auf die Regelung auswirkt.

Durch die US-A-4 282 470 ist ein Regelsystem bekannt, durch welches eine Kraftwandleranordnung in einer abgeglichenen Stellung gehalten wird. Unter Kraftwandlern sind dabei Kreisel und Beschleunigungsmesser zu verstehen. Abgriffe dieser Kraftwandler sind über Signalaufbereitungsmittel auf einen Analog-Digital-Wandler geschaltet. Die digitalisierten Abgriffsignale sind auf einen Rechner geschaltet. Dieser bestimmt das genaue Zeit-Kraft-Produkt, das auf die Kreiselanordnung aufzuschalten ist. Ein Digital-Analog-Wandler liefert dann ein analoges Ausgangssignal , das auf einen Drehmomentgeber aufgeschaltet ist.

Durch die GB-A-2 025 091 ist eine Trägheitssensoranordnung bekannt, bei welcher Abgriffsignale gemultiplext und digitalisiert werden, auf einen Rechner aufgeschaltet werden. Der Rechner berechnet Drehmomente. Diese Drehmomente werden durch einen Digital-Analog-Wandler wieder in Analogsignale umgesetzt und auf Drehmomenterzeuger aufgeschaltet.

Der Erfindung liegt die Aufgabe zugrunde, eine Trägheitssensoranordnung der eingangs genannten Art so auszubilden, daß eine nachgeschaltete Signalverarbeitung zur Korrektur von Kreiselfehlern entbehrlich wird.

Erfindungsgemäß wird diese Aufgabe dadurch gelöst, daß

(e) der Kreisel einen Teil einer Kreiselanordnung mit drei Abgriffen bildet, wobei die Abgriffe auf Drehbewegungen um drei zueinander senkrechte Achsen ansprechen und drei Abgriffsignale liefern,

(f) ein Multiplexer vorgesehen ist, durch welchen die Abgriffsignale nacheinander auf den Digital-AnalogWandler und auf den Rechner aufschaltbar sind,

(g) Beschleunigungsmessermittel vorgesehen sind, welche auf Beschleunigungen in Richtung dreier zueinander senkrechter Empfindlichkeitsachsen ansprechen, und

(h) der Rechner

- zur Kompensation des Einflusses der Drehbeschleunigung um eine Achse auf die Drehgeschwindigkeitsmessung eingerichtet ist,

- zur Kompensation des Einflusses der Linearbeschleunigungen auf die Drehgeschwindigkeitsmessung eingerichtet ist und

- einen Kreiselparameterspeicher enthält, in welchem Kreiselparameter, die aufgrund einer Prüfung der gesamten Trägheitssensoranordnung bestimmt werden, fest speicherbar sind, wobei diese Kreiselparameter bei der Bildung des Ausgangssignals im Rechner berücksichtigt werden.

Es erfolgt somit eine Kompensation von Kreiselfehlern in den Fesselkreisen der Trägheitssensoranordnung. Die Trägheitssensoranordnung selbst, die aus Kreiseln und Beschleunigungsmessern aufgebaut ist, liefert bereits fehlerkorrigierte Signale. Eine nachgeschaltete Signalverarbeitung für die Fehlerkorrektur ist entbehrlich.

Ausgestaltungen der Erfindung sind Gegenstand der abhängigen Patentansprüche.

Ein Ausführungsbeispiel der Erfindung ist nachstehend unter Bezugnahme auf die zugehörigen Zeichnungen näher erläutert.

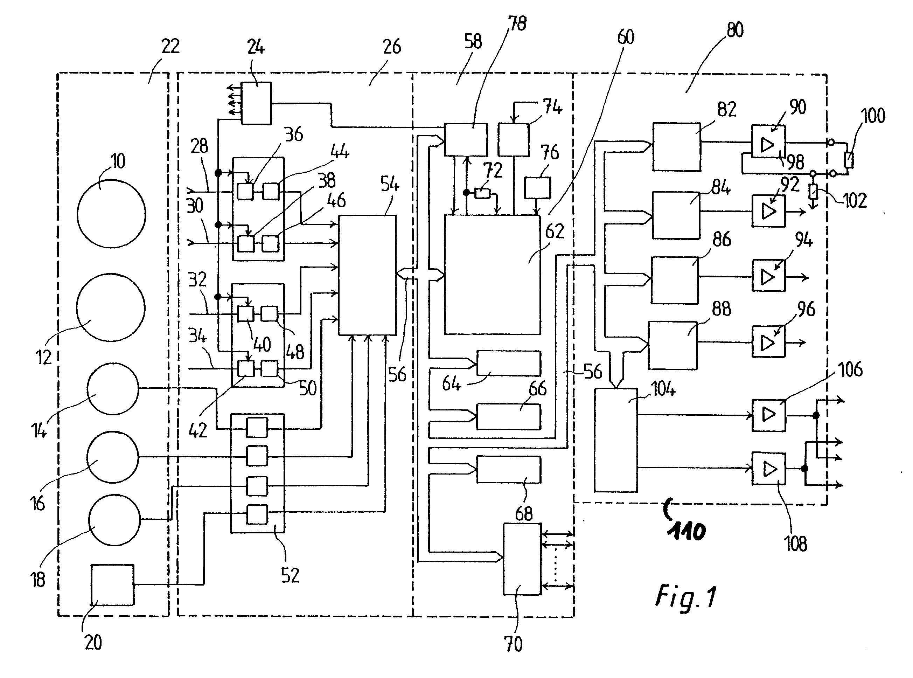

Fig.1    ist ein Blockdiagramm einer Trägheitssensoranordnung.

Fig.2    zeigt schematisch die räumliche Anordnung der Trägheitssensoren bei einer Trägheitssensoranordnung nach Fig.1.

Fig.3    zeigt schematisch die Konstruktion eines bei der Trägheitssensoranordnung von Fig.1 und 2 benutzten dynamisch abgestimmten Kreisels.

Fig.4    ist eine schematisch - perspektivische Darstellung und zeigt einen Kreisel mit seiner Drallachse und den beiden Eingangsachsen.

Fig.5    ist ein Flußdiagramm der Signalverarbeitung im Rechner bei der Trägheitssensoranordnung von Fig.1.

Fig.6    ist ein Blockdiagramm der digitalen Signalverarbeitung zur Erzeugung von digitalen Fesselsignalen, die mittels eines D/A-Wandlers in Ströme umgesetzt werden, welche auf Drehmomenterzeuger des betreffenden Kreisels aufgeschaltet sind.

Fig.7    ist ein Blockdiagramm der digitalen Signalverarbeitung für die Korrektur der digitalen Fesselsignale zur Erzeugung von Drehgeschwindigkeitssignalen.

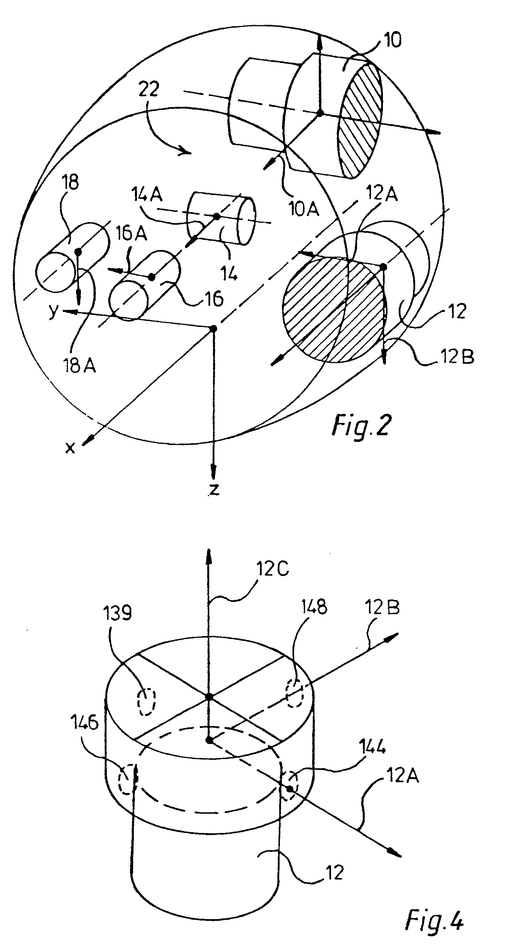

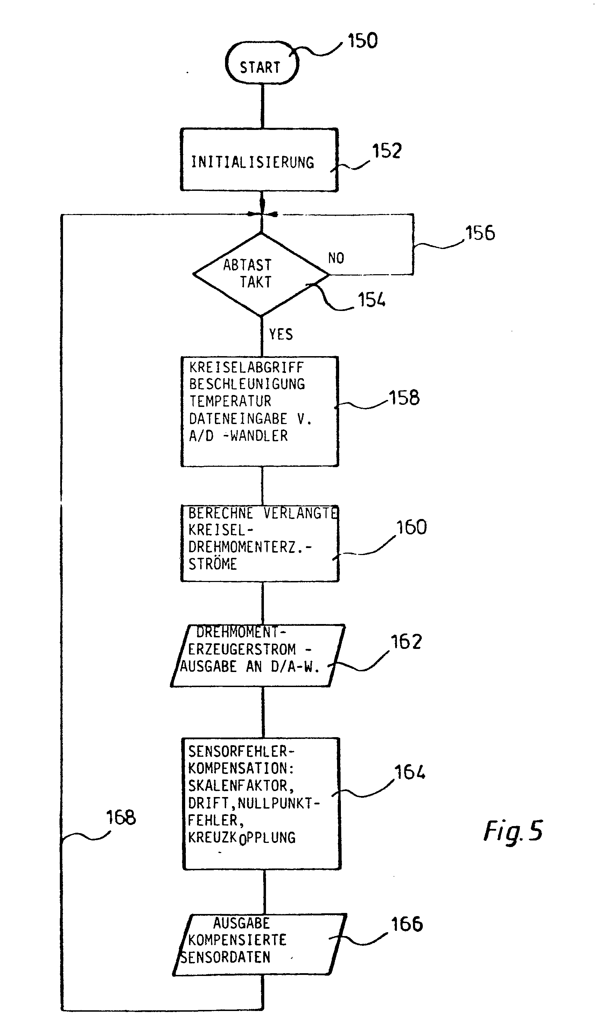

Bei dem Ausführungsbeispiel der Erfindung enthält die Trägheitssensoranordnung einen ersten Kreisel 10, dessen zur Drallachse senkrechte Eingansachse 10 A. (Fig. 2) mit der x-Achse eines rechtwinkligen Koordinatensystems x, y, z zusammenfällt. Die Trägheitssensoranordnung enthält weiterhin einen zweiten Kreisel 12, der zwei Eingangsachsen aufweist. Eine Eingangsachse 12 A ist parallel zur y-Achse des Koordinatensystems. Die andere Eingangsachse 12 B ist parallel zur z-Achse des Koordinatensystems. Es sind weiterhin drei Beschleunigungsmesser 14, 16, 18 vorgesehen. Die Empfindlichkeitsachsen 14 A, 16 A, 18 A der Beschleunigungsmesser 14, 16, 18 sind parallel zu je einer der Koordinatenachsen x bzw. y bzw. z des besagten Koordinatensystems. Schließlich sind Temperaturfühler 20 vorgesehen. Die Kreisel 10, 12, die Beschleunigungsmesser 14, 16, 18 und die Temperaturfühler 20 sind in einem Sensorcluster 22 angeordnet. In an sich bekannter Weise ist jeder Kreisel 10 und 12 als dynamisch abgestimmter Kreisel ausgebildet. Jeder Kreisel z. B. 12 hat eine erste Eingangsachse 12 A (Fig. 2 und 4) senkrecht zu einer Drallachse 12 C und eine zweite Eingangsachse 12 B senkrecht zu der Drallachse 12 C und zu der ersten Eingangsachse 12 A.

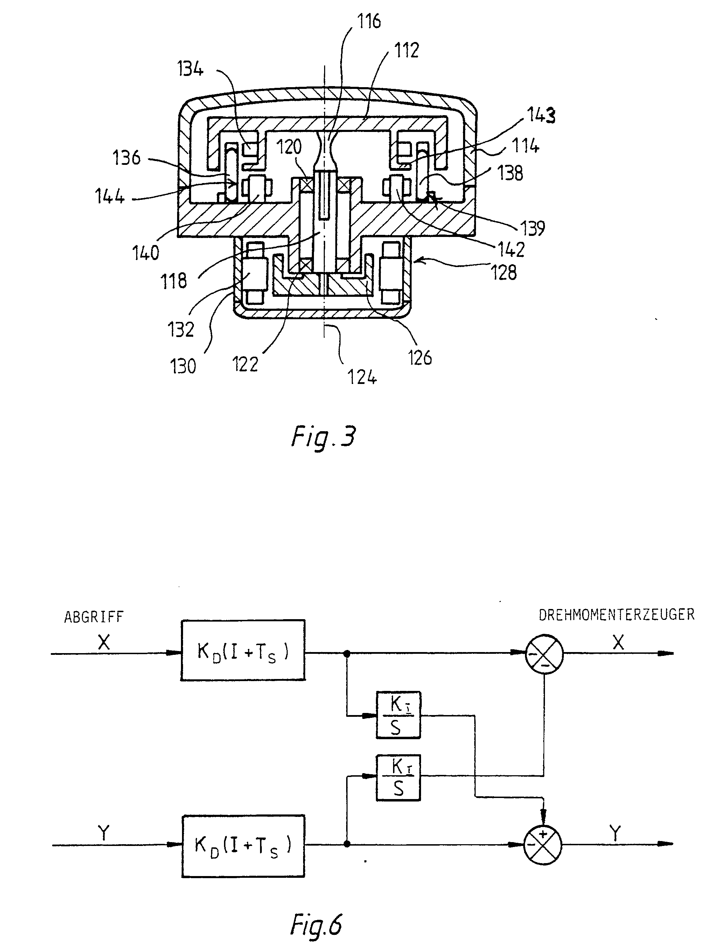

Der Aufbau eines dynamisch abgestimmten Kreisels ist in Fig.3 schematisch dargestellt. Fig.3 ist ein Schnitt längs der Ebene, welche durch die Drallachse 12 C und die Eingangsachse 12 B in Fig. 4 bestimmt ist. Ein Schnitt längs der Ebene, welche durch die Drallachse 12 C und die Eingangsachse 12 A in Fig 4 bestimmt ist, sieht genau so aus wie Fig. 3 und ist daher nicht gesondert dargestellt.

Ein Kreiselrotor 112 ist in einem Rotorgehäuse 114 angeordnet. Er ist über eine Federgelenkanordnung 116 mit einer Welle 118 verbunden. Die Welle 118 ist in Lagern 120 und 122 in dem Rotorgehäuse 114 um eine Motorachse 124 drehbar gelagert. An der Welle 118 sitzt ein Läufer 126 eines Kreiselmotors 128. Der Kreiselmotor 128 ist in einem Motorgehäuse 130 angeordnet. Das Motorgehäuse 130 schließt sich an das Rotorgehäuse 114 an. In dem Motorgehäuse sitzt der Ständer 132 des Kreiselmotors. Der Kreiselrotor 112 weist einen Magnetring 134 auf. Auf den Magnetring 134 wirken zwei in der Ebene der Eingangsachse 12 B und diametral zueinander in bezug auf die Motorachse 124 angeordnete Drehmomenterzeugerspulen 136, 138 als Drehmomenterzeuger 139 zur Erzeugung eines Drehmoments um die zur Papierebene in Fig.3 senkrechte Eingangsachse 12 A. Weiterhin sind diametral einander gegenüberliegende Abgriffspulen 140 und 142 vorgesehen, die mit einem Ring 143 hoher Permeabilität an dem Kreiselrotor 112 zusammenwirken. Die Abgriffspulen 140 und 142 bilden einen Abgriff 144, der auf Auslenkungen des Kreiselrotors 112 um die zur Papierebene in Fig.3 senkrechte Eingangsachse 12 A anspricht.

Die Federgelenkanordnung kann nach Art der US-PS 4 592 242 ausgebildet sein. Dabei ist eine Abstimmung vorgenommen, derart, daß die durch Federgelenke auf den Kreiselrotor 112 ausgeübten Momente durch dynamische Momente gerade kompensiert werden. Der Kreiselrotor verhält sich daher mechanisch wie ein freier Kreisel.

Wie in Fig.4 schematisch dargestellt ist, sitzen der Drehmomenterzeuger 139 und der Abgriff 144 auf der Eingangsachse 12 A. Ein entsprechend ausgebildeter Drehmomenterzeuger 146 und ein entsprechend ausgebildeter Abgriff 148 sitzen auf der Eingangsachse 12 B.

Auf der ersten Eingangsachse 12 A sitzen somit ein erster Abgriff 144 in Form eines mit einer Wechselspannung gespeisten Lageabgriffs und ein erster Drehstromerzeuger 139. Auf der zweiten Eingangsachse 12 B sitzen ein zweiter Abgriff 148, ebenfalls in Form eines mit einer Wechselspannung gespeisten, induktiven Lageabgriffs und ein zweiter Drehmomenterzeuger 146. Das Abgriffsignal des ersten Abgriffs 144 erzeugt über einen noch zu beschreibenden Fesselkreis ein Fesselsignal, das auf den zweiten Drehmomenterzeuger 146 aufgeschaltet ist. Umgekehrt erzeugt das Abgriffsignal des zweiten Abgriffs 148 über den Fesselkreis ein Signal, das auf den ersten Drehmomenterzeuger 139 aufgeschaltet ist. Eine Drehung des Gehäuses 114 um die erste Eingangsachse 12 A des Kreisels 12, dessen Drallachse 12 C ihre Orientierung im Raum beizubehalten trachtet, führt zu einem Abgriffsignal des zweiten Abgriffs 148. Dieses Abgriffsignal bewirkt, daß der erste Drehmomenterzeuger 139 ein Drehmoment auf den Kreiselrotor 112 um die zweite Eingangsachse 12 B ausübt. Hierdurch präzediert der Kreiselrotor 112 um die erste Eingangsachse 12 A so, daß das Abgriffsignal des zweiten Abgriffs 148 praktisch auf null gehalten wird. Das Drehmoment und damit das dem ersten Drehmomenterzeuger 139 zugeführte Fesselsignal sind proportional der Winkelgeschwindigkeit um die erste Eingangsachse 12 A. In entsprechender Weise wirken der zweite Abgriff 148 und der erste Drehmomenterzeuger 139 bei Winkelgeschwindigkeit um die zweite Eingangsachse 12 B zusammen. Auf diese Weise ist der Kreisel 10 oder 12 elektrisch an seine Mittellage gefesselt.

Die Fesselsignale sind proportional den Winkelgeschwindigkeiten um die erste und zweite Eingangsachse. Die Abgriffe erhalten Wechselspannungen von einer Abgriffversorgung 24, die auf einer Karte 26 für die "Signalaufbereitung" angeordnet sind. Die Abgriffsignale der Kreisel 10 und 12, welche Wechselspannungssignale mit der Frequenz und Phase der Wechselspannung von der Abgriffversorgung 24 sind, liegen über Eingänge 28, 30, 32, 34 an Demodulatoren 36, 38, 40, 42 an. Die Demodulatoren 36, 38, 40, 42 werden von der Wechselspannung gesteuert, die auch von der Abgriffversorgung 24 als Speisespannung auf die Abgriffe der Kreisel 10 und 12 gegeben wird. Den Demodulatoren 36, 38, 40, 42 sind Tiefpaßfilter 44, 46, 48, 50 nachgeschaltet. Durch die Tiefpaßfilter 44, 46, 48, 50 wird die phasenabhängig gleichgerichtete Wechselspannung geglättet. Es werden so Abgriffsignale in Form von Gleichspannungen erzeugt.

Mit 52 sind Signalaufbereitungsmittel für die Beschleunigungsmessersignale der Beschleunigungsmesser 14, 16, 18 und für das Temperatursignal der Temperaturfühler 20 bezeichnet, welche ebenfalls Ausgangssignale in Form von Gleichspannungen liefern.

Die Abgriffsignale, die Beschleunigungsmessersignale und das Temperatursignal liegen an einem Multiplexer und A/D-Wandler 54 von 12 Bit, der als integrierte Schaltung ebenfalls auf der Karte 26 montiert ist. Der Multiplexer und A/D-Wandler 54 überträgt die Abgriffsignale, die Beschleunigungsmessersignale und das Temperatursignal nacheinander auf einen Datenbus 56. Es handelt sich bei dem Multiplexer und A/D-Wandler um einen handelsüblichen integrierten Baustein, der daher hier nicht näher beschrieben wird.

Auf einer zweiten Karte 58 sitzt ein Rechner, der generell mit 60 bezeichnet ist. Der Rechner 60 enthält einen Mikroprozessor 62, einen Direktzugriffsspeicher (RAM) 64, einen EPROM 66 und einen elektrisch änderbaren Speicher (EEPROM) 68, die alle mit dem Datenbus 56 verbunden sind. Weiterhin ist mit dem Datenbus 56 eine Datenbus-Schnittstelle 70 verbunden, über welche Signale ein- und ausgebbar sind. Über die Datenbus-Schnittstelle 70 erfolgt die Kommunikation mit anderen, außenstehenden Systemen.

Auf der Karte 58 sind weiterhin ein Quarz 72 zum Betrieb des Mikroprozessors 62, eine Schaltung 74 zur Power-Up-Initialisierung sowie eine Überwachungsschaltung 76 für den Betrieb des Mikroprozessors (Watch Dog) vorgesehen. Der Aufbau des Rechners ist konventionell und daher hier nicht in allen Einzelheiten beschrieben.

Auf der Karte 58 sitzt ein Timer 78, der mit dem Datenbus 56 sowie dem Mikroprozessor 62 verbunden ist. Der timer 78 steuert die Abgriffversorgung 24.

Mit dem Datenbus 56 ist ein Digital-Analog-Wandler 80 verbunden. Der Digital-Analog-Wandler 80 enthält vier D/A-Wandlerbausteine 82, 84, 86, 88, die mit dem Datenbus 56 verbunden sind. Die D/A-Wandlerbausteine liefern analoge Signale entsprechend den von dem Rechner 60 gelieferten, die Drehgeschwindigkeiten darstellenden, digitalen Ausgangssignalen. Der Digital-Analog-Wandler 80 enthält weiterhin vier Präzisionsstromquellen 90, 92, 94, 96, welche die analogen Signale der D/A-Wandlerbausteine 82, 84, 86, 88 in einen dazu proportionalen Ausgangsstrom umsetzen, der jeweils durch eine Wicklung eines Drehmomenterzeugers fließt. Der Drehmomenterzeuger erzeugt dann ein dem Ausgangsstrom proportionales Drehmoment.

Eine Präzisionsstromquelle 90 ist in Verbindung mit dem D/A-Wandlerbaustein 82 näher dargestellt. Die Präzisionsstromquelle 90 enthält einen Differenzverstärker 98, an dessen Ausgang die Wicklung 100 des Drehmomenterzeugers in Reihe mit einem Meßwiderstand 102 liegt. Am Eingang des hochverstärkenden Verstärkers 90 liegten gegeneinandergeschaltet die Spannung des D/A-Wandlerbausteines 82 und -als Rückführung - die an dem Meßwiderstand 102 abfallende Spannung.

Es ist ferner ein weiterer Timer 104 mit einer Zusatzlogik vorgesehen. Der Timer 104 ist mit dem Datenbus 56 verbunden und wird von dem Mikroprozessor 62 direkt angesprochen. Der Timer 104 steuert über Leistungsverstärker 106 und 108 die Phasen der Kreiselmotore für die Kreisel 10 und 12 an

Der Digital-Analog-Wandler 80, der Timer 104 und die Leistungsverstärker 106 und 108 sind auf einer Karte 110 angeordnet.

Die Karten 26, 58 und 110 sind mit dem Sensorcluster 22 zu einer Baugruppe vereinigt.

Fig.5 ist ein Flußdiagramm und veranschaulicht die Signalverarbeitung im Rechner.

Der Start des Programms ist durch ein Oval 150 symbolisiert. An den Start des Programms schließt sich eine übliche Initialisierung an, die durch ein Rechteck 152 symbolisiert ist. Die Abtastung der Daten und ihre Verarbeitung erfolgt in einem vorgegebenen Takt. Die Taktperiode ist etwas länger als die Zeit, die für die Signalverarbeitung erforderlich ist. Es muß dafür gesorgt werden, daß die Abtastung der Daten jeweils in definierten Zeitpunkten erfolgt. Daher enthält das Programm eine Abfrage, ob das Taktsignal anliegt oder nicht. Diese Abfrage ist durch einen Rhombus 154 symbolisiert. Bei Nichtanliegen des Taktsignals (NEIN) wird eine Schleife 156 durchlaufen. Bei Anliegen des Taktsignals (JA) läuft das Programm weiter ab.

Es werden dann die Daten von den Kreiselabgriffen, den Beschleunigungsmessern 14,16,18 und dem Temperaturfühler 20 abgetastet und über den Multiplexer und A/D-Wandler 54 in den Rechner 60 eingegeben. Das ist durch das Rechteck 158 dargestellt. Der Rechner 60 berechnet daraus die auf die Drehmomenterzeuger der Kreisel 10 und 12 aufzuschaltenden Ströme. Diese Ströme werden zunächst als digitale Signale vorgegeben. Das ist durch das Rechteck 160 dargestellt.

Die so in digitaler Form erhaltenen Werte für die auf die Drehmomenterzeuger der Kreisel 10 und 12 aufzuschaltenden Ströme werden durch die D/A-Wandlerbausteine 82,84,86 und 88 in entsprechende Ströme umgesetzt und unmittelbar auf die zugehörigen Drehmomenterzeuger aufgeschaltet. Hierdurch erfolgt eine elektrische Fesselung der Kreisel an ihre Ruhelage. Das geschieht mit minimaler Verzögerung. Die Kreisel sind daher sicher an ihre Ruhelage gefesselt, auch wenn die Werte für die Ströme nicht ideal den auftretenden Drehgeschwindigkeiten entsprechen sondern noch mit bestimmten Fehlern behaftet sind. In dem Flußdiagramm sind diese Umwandlungen durch ein Viereck 162 dargestellt.

Die digital erhaltenen Werte für die auf die Drehmomenterzeuger aufzuschaltenden Ströme werden weiterhin im Rechner 60 einer Sensorfehlerkompensation unterworfen. Es werden Sensorfehler wie Skalenfaktorfehler, Drift bzw. Nullpunktfehler, Fehlausrichtung und Kreuzkopplung kompensiert. Das ist durch das Rechteck 164 dargestellt. Die so erhaltenen kompensierten Daten werden ausgegeben. Das ist durch das Viereck 166 dargestellt.

Anschließend geht das Programm wieder über Schleife 168 zu der Abfrage gemäß Rhombus 154 zurück. Beim nächsten Taktsignal erfolgt eine erneute Abtastung der Daten. Die beschriebene Signalverarbeitung wiederholt sich.

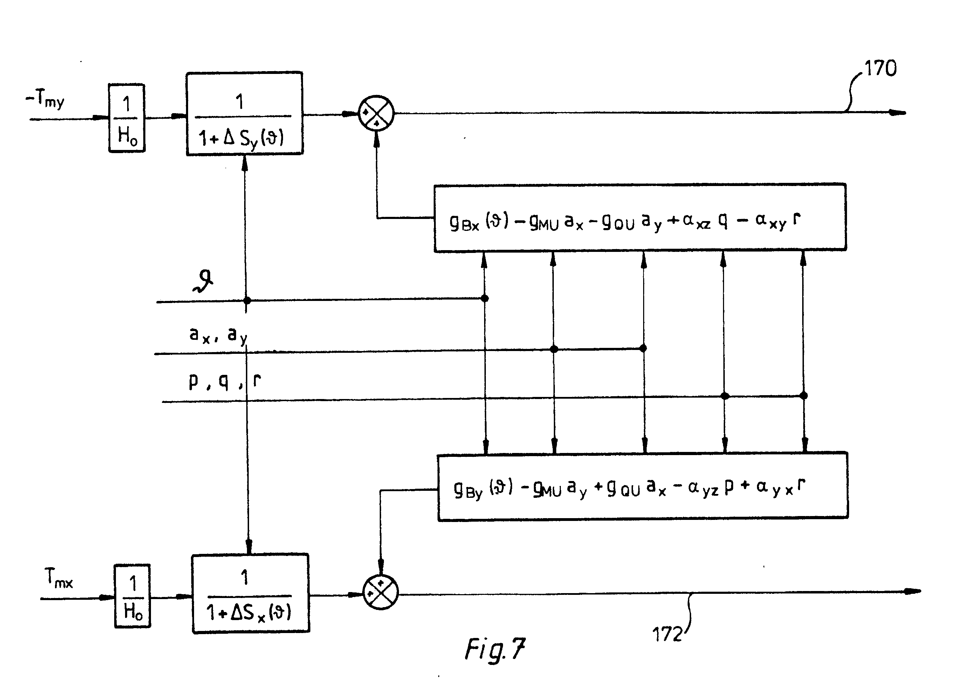

Fig.6 zeigt in Form eines Blockdiagramms für einen der Kreisel die digitale Signalverarbeitung der von den Abgriffen 144,148 gelieferten Signale zur Erzeugung von digitalen, den Werten der Ströme für die Drehmomenterzeuger entsprechenden Ausgangssignalen.

Die von den Abgriffen 144, 148 gelieferten und digitalisierten Signale werden vom Rechner 60 mit einer Übertragungsfunktion $K_D(1 + Ts)$ übertragen. Dabei ist

$s$      die Variable der Laplace-Transformation,

$T$      eine Zeitkonstante

$K_D$      ein Übertragungsfaktor.

Jedes der so übertragenen Signale des Abgriffs 144 oder 148 wird einmal unter Vorzeichenumkehr als ein erster Summand auf den digitalen Ausgang gegeben, der das digitale Ausgangssignal entsprechend dem verlangten Strom für den Drehmomenterzeuger liefert. Diesem ersten Summanden wird der erste Summand von dem jeweils anderen Abgriff mit einer Übertragungsfunktion $K/s$ mit positivem bzw. mit negativem Vorzeichen als zweiter Summand überlagert.

Es ergeben sich auf diese Weise digitale Ausgangssignale, die mittels der D/A-Wandlerbausteine in analoge Ströme für die Drehmomenterzeuger umgewandelt werden.

Die Digitalsignale $-T_{my}$ und $T_{mx}$ werden im Rechner 60 außerdem hinsichtlich der Sensorfehler korrigiert. Das ist in Fig.7 in einem Blockschaltbild dargestellt.

Die digitalen Signale $-T_{my}$ und $T_{mx}$ werden durch den Kreiseldrall $H_0$ dividiert. Es erfolgt dann eine Korrektur hinsichtlich des Skalenfaktorfehlers, indem die Signale weiterhin durch $1 + S_y(\vartheta)$ bzw. durch $1 + S_x(\vartheta)$ dividiert werden. Darin ist

$S_y$      der Skalenfaktorfehler für den Zusammenhang zwischen dem Signal, das den Strom durch den um die y-Achse wirkenden Drehmomenterzeuger bestimmt, und der tatsächlichen Drehgeschwindigkeit um die x-Achse,

$S_x$      der Skalenfaktorfehler für den Zusammenhang zwischen dem Signal, das den Strom durch den um die x-Achse wirkenden Drehmomenterzeuger bestimmt, und der tatsächlichen Drehgeschwindigkeit um die y-Achse und

$\vartheta$      die Temperatur.

Den so korrigierten Signalen werden Korrektursignale überlagert, welche die Dimension von Kreiseldriften haben, in der Form:

$$g_{Bx}(\vartheta) - g_{MU}a_x - g_{QU}a_y + \alpha_{xz}q - \alpha_{xy}r$$

$$g_{By}(\vartheta) - g_{MU}a_y + g_{QU}a_x - \alpha_{yz}p + \alpha_{yx}r.$$

Darin sind:

$g_{Bx}(\vartheta)$ und $g_{By}(\vartheta)$

temperaturabhängige Kreiseldriften,

$\vartheta$

die Temperatur,

$g_{MU}$

ein Masseunwuchtfaktor,

$a_x$ und $a_y$

Beschleunigungen längs der x-Achse bzw. der y-Achse,

$g_{QU}$

ein Kreuzkopplungsfaktor (Quadraturfaktor) und

$\alpha_{xz}, \alpha_{xy}, \alpha_{yz}, \alpha_{yx}$

Fehlausrichtungswinkel.

Die Temperatur $\vartheta$ wird von dem Temperaturfühler 20 geliefert. Die Beschleunigungen $a_x$ und $a_y$ werden von den Beschleunigungsmessern 14 und 16 geliefert. Die Winkelgeschwindigkeiten p,q und r werden von den Kreiseln 10 und 12 gemessen. Für die Weiterverarbeitung stehen dann an Ausgängen 170 und 172 korrigierte Winkelgeschwindigkeitssignale in digitaler Form zur Verfügung.

Die beschriebene Trägheitssensoranordnung arbeitet wie folgt:

Die Abgriffsignale der Kreisel 10 und 12 werden durch die Demodulatoren 36, 38, 40, 42 demoduliert. Die demodulierten Signale werden durch die Tiefpaßfilter geglättet und über den Multiplexer und A/D-Wandler als digitale Signale auf den Rechner 60 gegeben. Ebenso erhält der Rechner 60 über den Multiplexer und A/D-Wandler 54 die Beschleunigungssignale von den Beschleunigungsmessern 14, 16, 18 sowie das Temperatursignal von dem Temperaturfühler 20.

Der Rechner 60 erzeugt aus den Abgriffsignalen digitale Ausgangssignale, die ähnlich wie die analogen Netzwerke nach dem Stand der Technik ein nach regelungstechnischen Gesichtspunkten gewähltes Zeitverhalten zeigen und durch den Digital-Analog-Wandler 80 in analoge Fesselsignale umgesetzt werden. Darüber hinaus ist der Rechner 60 so programmiert, daß die Einflüsse des oben schon geschilderten "Kreuzkopplungsverhaltens", d. h. der Beeinflussung der Winkelgeschwindigkeitsmessung um eine Eingangsachse durch Drehbewegungen um die andere Eingangsachse, kompensiert werden. Der Rechner 60 bewirkt auch die Kompensation von Einflüssen der Linearbeschleunigung auf die Winkelgeschwindigkeitsmessung der Kreisel 10 und 12. Schließlich bewirkt der Rechner 60 auch eine Temperaturkompensation.

Kreiselparameter wie Abgriffnullpunktfehler, Skalenfaktor, Temperaturabhängigkeit des Skalenfaktors, Ausrichtfehler bei der Montage der Kreisel, Beschleunigungsabhängigkeiten etc. werden an der montierten Baugruppe gemessen und in dem elektrisch änderbaren Speicher 68 gespeichert. Sie werden dann in dem Programm des Rechners 60 bei der Signalverarbeitung berücksichtigt. Es erfolgt also nicht eine Vermessung jedes einzelnen Trägheitssensors, sondern die Kreiselparameter werden an der gesamten, montierten Trägheitssensoranordnung gemessen und in einem Speicher 68 gespeichert. Die Berücksichtigung dieser Kreiselparameter erfolgt nicht wie bei dem Stand der Technik in einem nachgeschalteten externen Rechner, dem die aus den Strömen der Drehmomenterzeuger digitalisierten Winkelgeschwindigkeitssignale zugeführt werden. Die Trägheitssensoranordnung liefert vielmehr bereits korrigierte Winkelgeschwindigkeitssignale, die durch Korrektur der digitalen, die Ströme bestimmenden Signale gebildet sind.

Die beschriebene Trägheitssensoranordnung bietet gegenüber vorbekannten Trägheitssensoranordnungen mit analogem Fesselkreis wesentliche Vorteile:

Durch die Verwendung eines digitalen Reglers werden Einflüsse von Temperatur und Alterung auf den Regler ausgeschaltet. Dadurch hängen komplexe Filter, Übertragungsfuktionen usw. nicht mehr von Bauteiltoleranzen und von Umgebungseinflüssen ab. Die digitale Verarbeitung gewährleistet hohe Auflösung.

Es treten nur minimale Zeitverzögerungen durch die Digitalisierung eines Fesselsignals auf.

Es tritt kein sich aufintergrierender Quantisierungsfehler auf. Dies soll an einem Beispiel erläutert werden: Die quantisierung der Präzisionsstromquelle 90 entspreche beispielsweise einer Winkelgeschwindigkeit von 30 °/h. Die wirksame Komponente der Winkelgeschwindigkeit der Erddrehung beträgt in mittleren Breiten etwa 12 °/h. Wirkt die Erddrehung auf den Kreisel, so ist der Betrag des zur Kompensation der Erddrehung erforderlichen rückstellenden Drehmomentes kleiner als ihn die Präzisionsstromquelle 90 liefern kann. Bei Stand der Technik mit analogem Fesselkreis erfolgt die Rückstellung des Kreisels durch ein entsprechend kleines Fesselsignal. Dieses kleine Fesselsignal wird aber bei der Analog-Digital-Wandlung nicht berücksichtigt. Das führt zu einem sich aufintegrierenden Fehler. Bei der beschriebenen Anordnung tritt zunächst das Ausgangssignal null auf und dementsprechend kein analoges Fesselsignal. Es wirkt also kein Rückstellmoment auf den Kreisel. Der Kreiselrotor dreht sich um einem kleinen Betrag relativ zu dem Gehäuse. Beim nächsten Abtastintervall wird erneut geprüft, ob das Abgriffsignal schon einen Wert angenommen hat, welcher der Quantisierung der Präzisionsstromquelle, d. h. der Einheit der niedristen Stelle des Ausgangssignals des A/D-Wandlerbausteins 82, entspricht. Dies wird nach einigen Abtastzyklen der Fall sein. Es erscheint dann in dieser niedrigsten Stelle des Ausgangssignals eine "eins". Die Präzisionsstromquelle 90 liefert ein entsprechendes analoges Fesselsignal, welches nun den Kreiselrotor um einen entsprechenden Winkelbetrag zurückstellt. Dieser Vorgang wiederholt sich beliebig. Drehgeschwindigkeiten, die geringer als die Auflösung des A/D-Wandlerbausteins 82 sind, werden daher bei der zeitlichen Änderung des digitalen Ausganssignals berücksichtigt. Die Aufintegration eines Quantisierungsfehlers wird somit verhindert. Diese Überlegungen gelten in gleicher Weise für beliebige Zwischenwerte der Winkelgeschwindigkeit, die von dem digitalen Ausgangssignal begrenzter Auflösung nicht repräsentiert werden können.

Auch Fehler der Präzisionsstromquelle in Form von Nullpunktfehlern, Skalenfaktorfehlern und Temperaturabhängigkeiten können in dem Modell berücksichtigt werden, das der Fehlerkompensation im Rechner zugrunde liegt.

Bei der beschriebenen Trägheitssensoranordnung werden von den Signalaufbereitungsbaugruppen und Wandlern nur konventionelle Genauigkeiten und Qualitäten gefordert und es ist kein Abgleich dieser Baugruppen und Wandler erforderlich. Die Herstellungskosten dieser Baugruppen sind daher relativ gering. Die Austauschbarkeit dieser Gruppen erlaubt eine rationelle Herstellung des Gesamtsystems.

**Patentansprüche**

1. Trägheitssensoranordnung, enthaltend
    (a) einen Kreisel (10) mit einer Drallachse (12C) und zwei zueinander und zu der Drallachse (12C) senkrechten Eingangsachsen (12A,12B),
    (b) einen ersten Abgriff (144), der auf eine Drehung um eine erste dieser Eingangsachsen (12A) anspricht, und einen zweiten Abgriff (148), der auf eine Drehung um die zweite dieser Eingangsachsen (12B) anspricht,
    (c) einen ersten Drehmomenterzeuger (139), durch welchen ein Drehmoment um die erste Eingangsachse (12A) auf den Kreisel (10) ausübbar ist, und einen zweiten Drehmomenterzeuger (146), durch welchen ein Drehmoment um die zweite Eingangsachse (12B) auf den Kreisel (10) ausübbar ist,
    (d) Fesselreglermittel, welche von den Ausgangssignalen der Abgriffe (144,148) beaufschlagt sind und durch welche auf die Drehmomenterzeuger (139,146) aufgeschaltete Fesselsignale erzeugbar sind, durch welche der Kreisel (10) elektrisch an eine Mittelstellung gefesselt ist, mit
        - Analog-Digital-Wandlermitteln (54), auf welche die Signale der Abgriffe (144,148) zur Erzeugung von digitalisierten Abgriffsignalen aufgeschaltet sind,
        - einem Digitalrechner (60), der von den digitalisierten Abgriffsignalen beaufschlagt ist und als Ausgangssignale digitale Fesselsignale liefert, und
        - einem Digital-Analog-Wandler (80), der von dem digitalen Fesselsignal beaufschlagt ist und analoge Fesselsignale liefert, die auf je einen der Drehmomenterzeuger (139,146) aufgeschaltet sind,

**dadurch gekennzeichnet, daß**

    (e) der Kreisel (10) einen Teil einer Kreiselanordnung mit drei Abgriffen bildet, wobei die Abgriffe auf Drehbewegungen um drei zueinander senkrechte Achsen ansprechen und drei Abgriffsignale liefern,
    (f) ein Multiplexer (54) vorgesehen ist, durch welchen die Abgriffsignale nacheinander auf den AnalogDigital-Wandler und auf den Digitalrechner (60) aufschaltbar sind,
    (g) Beschleunigungsmessermittel (14,16,18) vorgesehen sind, welche auf Beschleunigungen in Richtung dreier zueinander senkrechter Empfindlichkeitsachsen (14A,16A,18A) ansprechen, und
    (h) der Digitalrechner (60)
        - zur Kompensation des Einflusses der Drehbeschleunigung um eine Achse auf die Drehgeschwindigkeitsmessung eingerichtet ist,
        - zur Kompensation des Einflusses der Linearbeschleunigungen auf die Drehgeschwindigkeitsmessung eingerichtet ist und
        - einen Kreiselparameterspeicher enthält, in welchem Kreiselparameter, die aufgrund einer Prüfung der gesamten Trägheitssensoranordnung bestimmt werden, fest speicherbar sind, wobei diese Kreiselparameter bei der Bildung des Ausgangssignals im Rechner berücksichtigt werden.

2. Trägheitssensoranordnung nach Anspruch 1, **dadurch gekennzeichnet, daß**
    (a) einer oder mehrere Temperaturfühler (20) vorgesehen sind,
    (b) die Signale der Temperaturfühler (20) digitalisiert auf den Digitalrechner (60) aufschaltbar sind und
    (c) durch den Digitalrechner (60) nach einem Kreiselfehlermodell der Temperatureinfluß auf die Drehgeschwindigkeitsmessung kompensierbar ist.

3. Trägheitssensoranordnung nach Anspruch 1 oder 2, **dadurch gekennzeichnet, daß** der Digitalrechner (60) mit den Trägheitssensoren (10,12,14,16,18) zu einer Baugruppe vereinigt ist.

4. Trägheitssensoranordnung nach einem der Ansprüche 1 bis 3, **dadurch gekennzeichnet, daß** der Digital-AnalogWandler (80) eine Präzisionsstromquelle (90..) enthält, welche gleichzeitig einen Strom für den Drehmomenterzeuger (139,146) liefert.

## Claims

1. Inertial sensor arrangement, comprising
   (a) a gyro (10) having a spin axis (12C) and two mutually perpendicular input axes (12A, 12B) perpendicular to the spin axis (12C),
   (b) a first pick-off (144) which responds to a rotation about a first one of these input axes (12A), and a second pick-off (148) which responds to a rotation about tile second one of these input axes (12B),
   (c) a first torquer (139) which is adapted to exert a torque on the gyro (10) about the first input axis (12A), and a second torquer (146) which is adapted to exert a torque on the gyro (10) about the second input axis (12B),
   (d) restraining control means to which the output signals from the pick-offs (144, 148) are applied and which are adapted to generate restraining signals applied to the torquers (139, 146), through which restraining signals the gyro (10) is electrically restrained in its central position, having
   - analog-to-digital converter means (54) to which the signals from the pick-offs (144, 148) are applied for generating digitized pick-off signals,
   - a digital computer (60) to which the digitized pick-off signals are applied and which supplies digital restraining signals as output signals, and
   - a digital-to-analog converter (80) to which the digital restraining signal is applied and which supplies analog restraining signals which are applied to one of the torquers (139, 146) each,

**characterized in that**

(e) the gyro (10) forms part of a gyro arrangement having three pick-offs, the pick-offs responding to rotary movement about three mutually perpendicular axes and supplying three pick-off signals,
(f) a multiplexer (54) is provided for applying the pick-off signals consecutively to the analog-to-digital converter and to the digital computer (60),
(g) accelerometer means (14, 16, 18) are provided, which respond to accelerations in the direction of three mutually perpendicular axes of sensitivity (14A, 16A, 18A), and
(h) the digital computer (60)
   - is adapted to compensate the influence of the rotary acceleration about an axis on the angular rate measurement,
   - is adapted to compensate the influence of the linear acceleration on the angular rate measurement, and
   - comprises a gyro parameter memory in which gyro parameters are fixedly stored, which gyro parameters are determined by examination of the total inertial sensor arrangement, these gyro parameters being taken into account when forming the output signal in the computer.

2. Inertial sensor arrangement as set forth in claim 1, **characterized in that**
   (a) one or several temperature sensors (20) are provided,
   (b) the signals from the temperature sensors (20) are digitized and applied to the digital computer (60), and
   (c) the digital computer (60) is adapted to compensate the temperature influence on the angular rate measurement according to a gyro error model.

3. Inertial sensor arrangement as set forth in claim 1 or 2, **characterized in that** digital computer (60) is united with the inertial sensors (10, 12, 14, 16, 18) to a unit.

4. Inertial sensor arrangement as set forth in any one of the claims 1 to 3, **characterized in that** the digital-to-analog converter (80) comprises a precision current source (90...) which, at the same time, supplies a current for the torquer (139, 146).

## Revendications

1. Disposition de détecteur inertiel, comprenant
   (a) un gyroscope (10) ayant un axe de spin (120) et deux axes d'entrée (12A, 12B) perpendiculaires l'un à l'autre et à l'axe de spin (120),

(b) un premier capteur (144) répondant à une rotation atour d'un premier de ces axes d'entrée (12A), et un second capteur (148) répondant à une rotation autour du second de ces axes d'entrée (12B),

(c) un premier générateur de couple (139) qui peut exercer un couple atour du premier axe d'entrée (12A) sur le gyroscope (10), et un second générateur de couple (146) qui peut exercer un couple autour du second axe d'entrée (12B) sur le gyroscope (10),

(d) des moyens de commande de restriction auxquels sont appliqués les signaux de sortie des capteurs (144, 148) et qui peuvent engendrer des signaux de restriction appliqués aux générateurs de couple (139, 146), et par lesquels le gyroscope (10) est électriquement restreint à une position centrale, comprenant

- des moyens convertisseurs analogiques digitaux (54) auxquels sont appliqués les signaux des capteurs (144, 148) afin d'engendrer des signaux de capteur digitalisés,
- un ordinateur digital (60) auquel sont appliqués les signaux de capteur digitalisés et qui fournit comme signaux de sortie des signaux de restriction digitaux, et
- un convertisseur digital analogique (80) auquel est appliqué le signal de restriction digital et qui fournit des signaux de restriction analogiques appliqués respectivement à un générateur de couple (139, 146),

caractérisée par le fait que

(e) le gyroscope (10) forme une partie d'une disposition de gyroscopes ayant trois capteurs répondant aux mouvements rotatifs autour de trois axes perpendiculaires et fournissant trois signaux de capteur,

(f) un multiplexeur (54) est prévu, par lequel les signaux de capteur sont succéssivement applicables au convertisseur analogique digital et à l'ordinateur digital (60),

(g) des moyens accéléromètres (14,16,18) répondant à des accélérations dans la direction de trois axes de sensibilité (14A, 16A, 18A) perpendiculaires, et

(h) l'ordinateur digital (60)

- est adapté à la compensation de l'influence de l'accélération rotative autour d'un axe sur la mesure de la vitesse de rotation,
- est adapté à la compensation de l'influence des accélérations linéaires sur la mesure de la vitesse de rotation, et

- comprend une mémoire de paramètres de gyroscope qui peut fixement mémoriser des paramètres de gyroscope déterminés en vertu d'un examen de toute la disposition de détecteur inertiel et pris en compte lors de la formation du signal de sortie dans l'ordinateur.

2. Disposition de détecteur inertiel selon la revendication 1, **caractérisée par le fait que**

(a) on a prévu un ou plusieurs détecteurs de la température (20),

(b) les signaux des détecteurs de la température (20) peuvent être appliqués de manière digitalisée à l'ordinateur digital (60), et

(c) l'influence de la température peut être compensée par l'ordinateur digital (60) selon un modèle d'erreur de gyroscope.

3. Disposition de détecteur inertiel selon la revendication 1 ou 2, caractérisée par le fait que l'ordinateur digital (60) est uni avec les détecteurs inertiels (10,12,14,16,18) de sorte à former un ensemble.

4. Disposition de détecteur inertiel selon l'une des revendications 1 à 3, **caractérisée par le fait que** le convertisseur digital analogique (80) comprend une source de courant de précision (90..) fournissant en même temps un courant pour le générateur de couple (139, 146).

Fig.1

Fig.2

Fig.4

*Fig.3*

*Fig.6*

START — 150

INITIALISIERUNG — 152

ABTAST TAKT — 154

NO — 156

YES

KREISELABGRIFF
BESCHLEUNIGUNG
TEMPERATUR
DATENEINGABE V.
A/D -WANDLER — 158

BERECHNE VERLANGTE
KREISEL-
DREHMOMENTERZ.-
STRÖME — 160

DREHMOMENT-
ERZEUGERSTROM -
AUSGABE AN D/A-W. — 162

SENSORFEHLER-
KOMPENSATION:
SKALENFAKTOR,
DRIFT,NULLPUNKT-
FEHLER,
KREUZKOPPLUNG — 164

168

AUSGABE
KOMPENSIERTE
SENSORDATEN — 166

*Fig. 5*

14

EP 0 251 157 B1

$-T_{my}$

$\dfrac{1}{H_0}$

$\dfrac{1}{1+\Delta S_y(\vartheta)}$

170

$g_{Bx}(\vartheta) - g_{MU}\, a_x - g_{OU}\, a_y + \alpha_{xz}\, q - \alpha_{xy}\, r$

$\vartheta$

$a_x,\ a_y$

$p,\ q,\ r$

$g_{By}(\vartheta) - g_{MU}\, a_y + g_{QU}\, a_x - \alpha_{yz}\, p + \alpha_{yx}\, r$

$T_{mx}$

$\dfrac{1}{H_0}$

$\dfrac{1}{1+\Delta S_x(\vartheta)}$

172

*Fig.7*